# DEMANDE DE BREVET EUROPEEN

(11) **EP 1 296 121 A1**
(43) Date de publication de la demande: **26.03.2003**
(21) Numéro de dépôt: 02292277.7
(22) Date de dépôt: 18.09.2002
(51) Int. Cl.: G01F 15/14, G01F 3/08

(54) **Procédé de fabrication d'élements constitutifs de compteurs de liquide en matière plastique et élements constitutifs de compteurs de liquide fabriqués par une telle methode**

(30) Priorité: 14.09.2001 FR 0111969
(71) Demandeur: Actaris S.A.S., 92542 Montrouge (FR)
(72) Inventeur: Demia, Laurent, 71000 Mâcon (FR); Petite, Michel, 71000 Mâcon (FR)
(74) Mandataire: Lenne, Laurence

(57) **Abrégé**

Le procédé de fabrication d'un compteur de liquide comportant différents éléments constitutifs tels qu'un corps de compteur (1), des moyens de mesure (17, 18, 19, 20) que sont une chmbre de mesure, son couvercle ou un piston et une bague de montage d'un totalisateur (14, 34), consiste à fabriquer au moins l'un desdits éléments constitutifs par un procédé de moulage par injection au moyen d'un moule de forme adaptée audit élément à fabriquer, en injectant une matière plastique autour d'un insert métallique (25, 26, 27, 28, 29, 36, 38, 50, 52, 54, 56, 58) destiné à former une partie de l'âme d'une partie d'un desdits éléments constitutifs.

## Description

L'invention se rapporte à un procédé de fabrication d'un compteur de liquide et également au compteur de liquide fabriqué par le procédé de fabrication selon l'invention. Généralement, un compteur de liquide comporte différents éléments tels qu'un corps de compteur, des moyens de mesure et une bague de montage d'un totalisateur. Le procédé de fabrication d'un tel compteur consiste à fabriquer au moins l'un desdits éléments constitutifs par un procédé de moulage par injection plastique au moyen d'un moule de forme adaptée audit élément à fabriquer.
L'invention trouve une application particulièrement intéressante dans le domaine des compteurs de liquide volumétrique du type à piston oscillant dont une partie des éléments constitutifs est fabriquée en matière plastique par un procédé de moulage par injection.

Dans le domaine des compteurs d'eau, un certains nombre d'éléments constitutifs du compteur sont fabriqués depuis de nombreuses années dans un alliage métallique tel que le laiton. Ce matériau offre une bonne tenue au vieillissement, en particulier au cours du temps les performances métrologiques du compteur, et son étanchéité sont maintenues.
Depuis de nombreuses années, les fabricants de compteur d'eau ont cherché à remplacer le laiton par du plastique. Le document US4,391,139 décrit par exemple certaines parties d'un compteur d'eau fabriqué en matière plastique par une technique d'injection plastique. Les différents éléments formant la chambre mesurante sont fabriqués par moulage par injection, chaque élément étant fabriqué au moyen d'un moule de forme adaptée. Le procédé d'injection employé est un procédé classique bien connu de l'homme du métier. Le matériau employé est un thermoplastique.
Les pièces de compteur d'eau en plastique apportent de nombreux avantages, tels que la possibilité de modifier le design de ces pièces avec intégration de nouvelles fonctions, changement de la couleur bien plus importante qu'avec le laiton, un gain de poids notable, un gain de coût de fabrication, une diminution du bruit généré par le compteur en fonctionnement, et enfin l'élimination des problèmes liés à la pollution de l'eau potable en contact avec le laiton. Néanmoins, un problème majeur subsiste avec les pièces de compteur d'eau en plastique car elles n'offrent pas une bonne performance mécanique ce qui conduit en particulier à des problèmes de tenue aux pressions de fluide élevées et au vieillissement. A titre d'exemple, on constate sur une durée bien inférieure à la durée de vie normale attendue pour un compteur d'eau, l'apparition de fissures conduisant à des fuites.

La présente invention a pour objectif de pallier aux inconvénients précités en proposant une méthode de fabrication qui permette de fabriquer directement par un procédé de moulage par injection au moins une partie des différents éléments constitutifs d'un compteur de liquide avec de meilleures caractéristiques mécaniques afin d'en améliorer les performances générales, par exemple pour maintenir leur résistance mécanique tout au long de la durée d'utilisation du compteur.

Cet objet est atteint grâce à un procédé selon l'invention consistant à fabriquer au moins l'un des éléments constitutifs du compteur par un procédé de moulage par injection au moyen d'un moule de forme adaptée audit élément à fabriquer, ledit procédé consistant à injecter une matière plastique autour d'un insert destiné à former une partie de l'âme d'une partie d'un desdits éléments constitutifs.

De manière avantageuse, cet insert présente une forme particulière adaptée à l'élément à fabriquer.
De préférence, l'insert est en matériau métallique.

Ce procédé dinjection permet d'obtenir directement après démoulage, un élément du compteur présentant des caractéristiques mécaniques améliorés sans qu'il soit nécessaire de faire subir à cet élément des traitements ultérieurs.

D'autres caractéristiques et avantages de l'invention apparaîtront dans la description suivante détaillée, non limitative, de divers modes de réalisation, en référence aux dessins annexés parmi lesquels :
- la figure 1 représente une vue en coupe d'un corps de compteur, ledit corps de compteur étant fabriqué par la méthode de l'invention selon un premier mode de réalisation;
- les figures 2.A à 2.F représentent une vue schématique en coupe partielle d'un totalisateur emmanché sur une bague de montage destinée à venir se visser avec un corps de compteur, ladite bague étant fabriquée par la méthode de l'invention selon un second mode de réalisation et selon différentes alternatives;
- la figure 3.A représente une vue schématique en coupe d'une chambre de mesure dont le couvercle est fabriqué par la méthode de l'invention selon un troisième mode de réalisation et selon une première alternative;

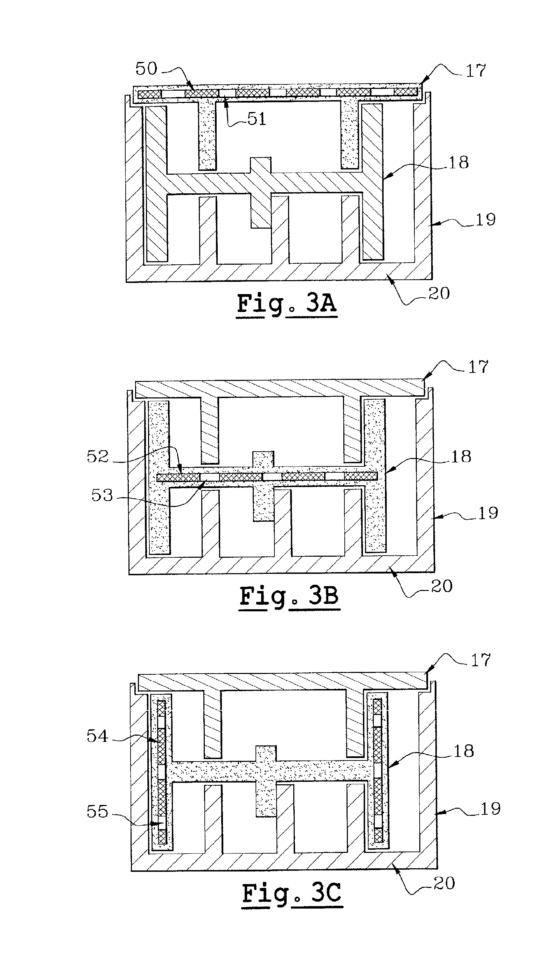

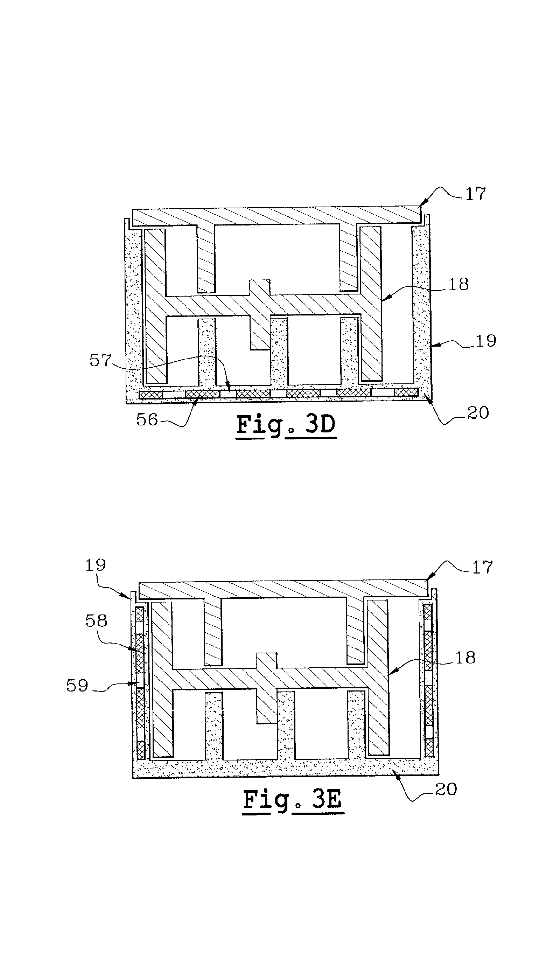

- la figure 3.B représente une vue schématique en coupe d'une chambre de mesure dont le piston est fabriqué par la méthode de l'invention selon un troisième mode de réalisation et selon une seconde alternative;
- la figure 3.C représente une vue schématique en coupe d'une chambre de mesure dont le piston est fabriqué par la méthode de l'invention selon un troisième mode de réalisation et selon une troisième alternative;
- la figure 3.D représente une vue schématique en coupe d'une chambre de mesure dont le fond est fabriqué par la méthode de l'invention selon un troisième mode de réalisation et selon une quatrième alternative;
- la figure 3.E représente une vue schématique en coupe d'une chambre de mesure dont le fond est fabriqué par la méthode de l'invention selon un troisième mode de réalisation et selon une cinquième alternative;
- la figure 4 représente un insert métallique selon un mode de réalisation particulier utilisé dans la fabrication des chambres de mesure selon les figures 3.A, 3.B et 3.D.

La description qui va suivre est faite en relation avec un compteur du type volumétrique. Néanmoins, l'homme de l'art pourra aisément appliquer cette méthode de fabrication de compteurs aux autres types de compteurs tels que par exemple les compteurs de vitesse.

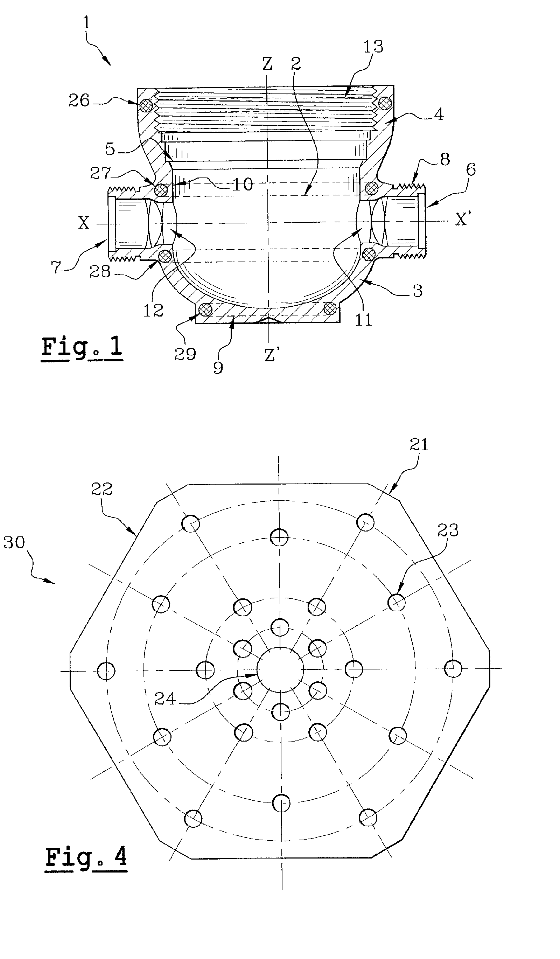

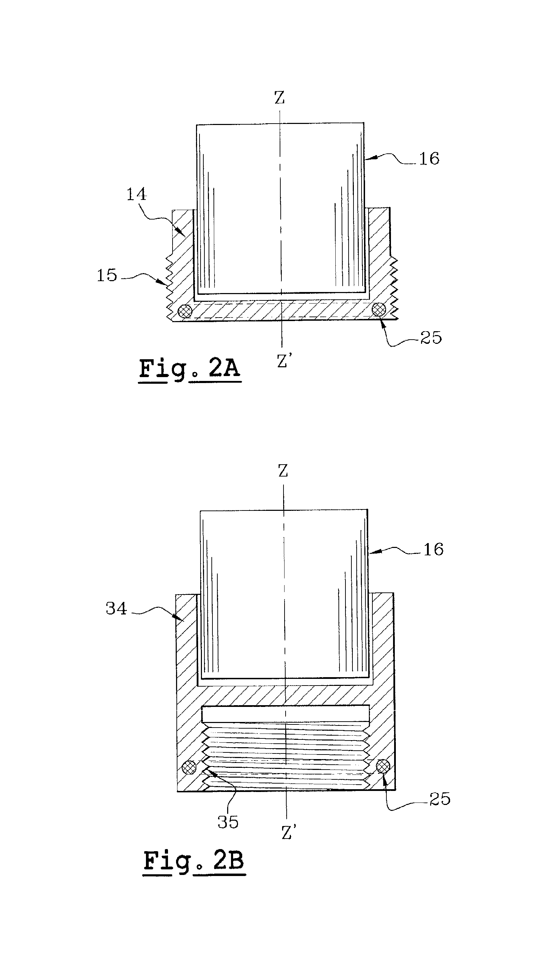

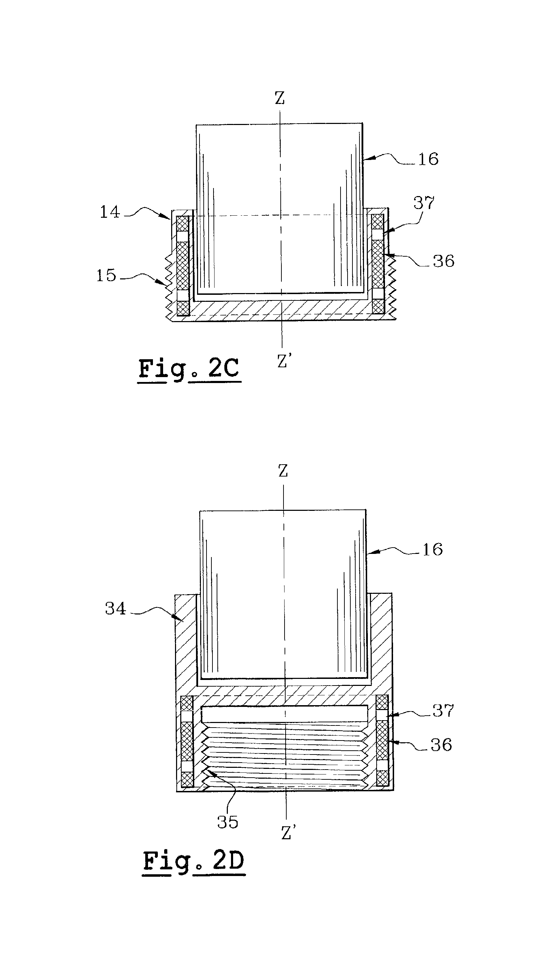

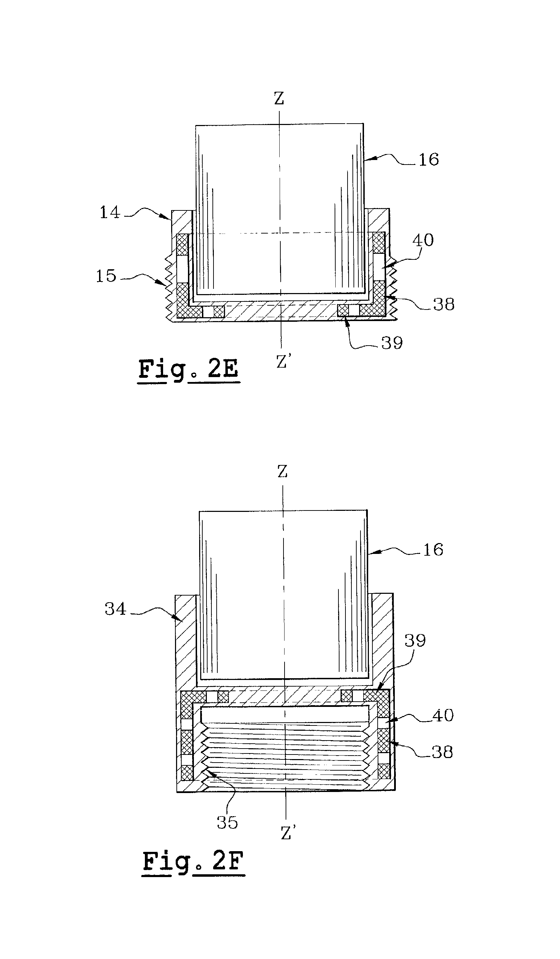

Le corps de compteur tel qu'illustré à la figure 1 comporte une bâche 1 présentant un axe de symétrie ZZ'. La bâche est une pièce monobloc qui comprend une partie inférieure 3 et une partie supérieure 4. La partie inférieure 3, qui définit le logement 2 dans lequel s'insère une chambre de mesure, est limitée par un fond 9 et une paroi latérale inférieure 10 de forme cylindrique. La partie supérieure 4 est limitée par une paroi latérale supérieure, également de forme cylindrique et comportant un filetage 13. Les parois latérales des deux parties sont raccordées par un épaulement 5.
Le corps de compteur comprend des tubulures d'entrée 6 et de sortie 7, de forme sensiblement cylindrique, qui comportent un filetage externe 8. Chacune des tubulures débouche dans la chambre de mesure 2 par un alésage ménagé dans la paroi latérale inférieure 10 de la chambre de mesure 2, en formant un injecteur 11 et un éjecteur 12 respectivement. L'injecteur et l'éjecteur présentent un axe commun XX' perpendiculaire à l'axe ZZ'.
La partie inférieure 3 délimite le logement de la chambre de mesure du compteur dans laquelle est montée, en fonction du type de compteur, par exemple une turbine, une hélice, ou un piston oscillant. Une chambre de mesure pour compteur volumétrique à piston oscillant est représentée sur les figure 3.A à 3.E.
Selon un premier mode de réalisation de l'invention, le corps de compteur comporte au moins un anneau 26, 27, 28, 29 noyé dans le plastique constituant le corps du compteur. De préférence, l'anneau est en métal, par exemple de l'acier inoxydable ou du laiton. D'autres types de matériaux présentant des caractéristiques de tenue mécanique similaire à celle du métal sont envisageables. L'anneau peut être de différentes sections selon la résistance souhaitée ou la place disponible. Egalement, il peut être avantageux de munir l'anneau d'au moins un trou afin de permettre un bon accrochage de l'insert et du plastique injecté formant le corps de compteur.
La fonction de cet anneau, respectivement de ces anneaux est de renforcer les zones de fragilité pouvant apparaître au fil du temps et de l'utilisation du compteur. L'avantage de ce mode de réalisation est l'augmentation de la résistance mécanique et la limitation de la déformation du corps de compteur lorsque ce dernier est soumis à des contraintes telles que des coups de bélier ou à une pression statique.
Selon une première alternative de ce mode de réalisation, un anneau 26 est positionné dans la partie supérieure 4. Un avantage supplémentaire de cet anneau 26 est qu'il permet de renforcer le filetage 13 de la zone de fixation dudit corps de compteur à la bague 14, 34 de montage (voir figure 2.A à 2.F) du totalisateur 16.
Selon une seconde alternative de ce mode de réalisation, un anneau 27 est positionné dans la paroi latérale inférieure 10 au dessus de la zone où les tubulures 6, 7 débouchent dans la chambre de mesure 2 en formant un injecteur 11 et un éjecteur 12 respectivement.
Selon une troisième alternative de ce mode de réalisation, un anneau 28 est positionné dans la paroi latérale inférieure 10 en dessous de la zone où les tubulures 6, 7 débouchent dans la chambre de mesure 2 en formant un injecteur 11 et un éjecteur 12 respectivement.
Selon une quatrième alternative de ce mode de réalisation, un anneau 29 est positionné dans le fond 9 de la partie inférieure 3.
Il est bien entendu envisageable de combiner l'ensemble des alternatives présentées précédemment pour obtenir un corps de compteur 1 tel que représenté en coupe à la figure 1.
Les anneaux représentés à la figure 1 ont une section circulaire. Néanmoins, d'autres formes de sections sont envisageables.

Le procédé de fabrication du corps de compteur consiste à injecter une matière plastique autour d'au moins un insert destiné à former une partie de l'âme du corps de compteur. Le moule est de forme adaptée au corps de compteur. L'insert a pour ce mode de réalisation, une forme d'anneau. De préférence, linsert est constitué de métal. 11 peut être percé d'au moins un trou. Selon les alternatives envisagées, l'anneau 26, 27, 28, 29 est positionné dans le moule dans la partie supérieure 4, au dessus et/ou en dessous de l'injecteur 11 et de l'éjecteur 12, et/ou dans le fond 9 respectivement. Après positionnement de l'insert métallique ou des inserts métallique au moyen de plots de maintien dans le moule, la matière plastique est injectée pour remplir le moule.

La partie supérieure 4 du corps de compteur est destinée à recevoir un totalisateur 16 dont la fonction est de transformer la quantité de liquide ayant traversé le compteur, en un nombre lisible ou communicable à un utilisateur extérieur et correspondant au volume de liquide mesuré.
Un totalisateur et sa bague de vissage ou de montage sont représentés schématiquement en coupe partielle sur les figures 2.A à 2.F. Le totalisateur 16 est emmanché sur une bague de montage 14, 34. Sur les figures 2.A, 2.C et 2.E, la bague 14 est munie d'un filetage 15 et se fixe dans le corps de compteur dans la partie supérieure 4. Sur les figures 2.B, 2.D et 2.F, la bague 34 est munie d'un taraudage interne 35 et est destinée à venir coiffer le corps de compteur. Dans ce cas le corps de compteur présente un filetage à l'extérieur de la partie supérieure 4 et non intérieur comme cela est représenté à la figure 1. La bague 14, 34 a pour fonction de fermer la partie supérieure du corps de compteur et de maintenir le totalisateur fixé au corps du compteur. Une solution alternative consiste à intégrer la bague vissée au totalisateur de sorte que l'ensemble ne forme qu'un seul élément à visser dans la partie supérieure 4 du corps de compteur.
Selon un second mode de réalisation de l'invention, la bague 14, 34 comporte au moins un anneau 25, 36, 38 noyé dans le plastique constituant la bague. De préférence, l'anneau est en métal, par exemple de l'acier inoxydable ou du laiton. L'anneau peut être de différentes section selon la résistance souhaitée ou la place disponible. Sur les figures 2.A et 2.B, l'anneau 25 présente une section circulaire. Sur les figures 2.C et 2.D, l'anneau 36 présente une section rectangulaire. Sur les figures 2.E et 2.F, l'anneau 38 présente une section en forme de L correspondant à un anneau de section rectangulaire tel que représenté aux figures 2.C à 2.D muni d'une collerette 39 dirigée vers l'axe ZZ' de la bague.
Il est envisageable pour l'ensemble des alternatives présentées de percer des trous 37, 40 dans l'anneau 25, 36, 38 afin d'améliorer l'accrochage de l'anneau et du plastique injecté formant la bague.

La fonction de cet anneau est d'améliorer la résistance de la bague de vissage 14, 34. L'avantage de ce mode de réalisation est la limitation de la déformation de la bague, lesdites déformations pouvant induire des blocages de pièces en mouvement tel que des engrenages dans le totalisateur.
Le procédé de fabrication de la bague 14, 34 et/ou du totalisateur à bague intégrée consiste à injecter une matière plastique autour d'au moins un insert métallique en forme d'anneau. Le moule est de forme adaptée à la bague ou au totalisateur. Après positionnement de l'anneau 25, 36, 38 au moyen de plots de maintien dans le moule au niveau du filetage 15 ou du taraudage 35 selon le cas, la matière plastique est injectée pour remplir le moule.

Une chambre de mesure pour compteur volumétrique à piston oscillant destinée à venir se loger dans la chambre de mesure 2 du corps de compteur 1 est représentée sur les figures 3.A à 3.E. La chambre de mesure est une chambre de forme cylindrique formée par différents éléments : une partie inférieure comportant une paroi latérale 19 et un fond 20, sur laquelle vient s'emboîter une partie supérieure comportant un couvercle 17. Un piston 18 de forme cylindrique de diamètre inférieur à celui de la chambre est positionné de manière excentrique à l'intérieur de la chambre. Le piston 18 comporte à mi-hauteur une paroi plane supportant en son centre deux tétons, l'un dirigé vers le fond, l'autre vers le couvercle. Le fond et le couvercle sont munis d'au moins une ouïe d'entrée et une ouïe de sortie (non représentées) pour l'admission et l'évacuation du fluide dans la chambre respectivement. La chambre comporte également une cloison fixe (non représentée) séparant l'ouïe d'entrée et l'ouïe de sortie. Généralement, la chambre comporte en périphérie un joint d'étanchéité (non représenté) destiné à forcer l'écoulement du liquide à travers la chambre de mesure en évitant l'écoulement direct du liquide de la tubulure d'admission vers la tubulure d'évacuation du compteur.
Selon un troisième mode de réalisation de l'invention, au moins l'un des éléments constitutifs de la chambre de mesure comporte un insert métallique noyé dans le plastique. De préférence, l'insert est en métal, par exemple de l'acier inoxydable ou du laiton. L'insert peut être de formes et d'épaisseurs différentes selon la résistance souhaitée ou la place disponible.
A titre d'exemple, sur la figure 4 est représenté un insert sous la forme une plaque métallique 30 hexagonale. La plaque 30 comprend six méplats 22 équidistants, chaque coin 21 étant rayonné pour servir de centrage de la plaque dans le moule. La plaque 30 est percée de trous 23 régulièrement espacés ainsi que d'un trou central 24, les trous permettant un meilleur recouvrement et une meilleure adhérence à la plaque du plastique injecté. Bien évidemment, le nombre ainsi que la position des trous peuvent être modifiés sans que la fonction de la pièce en soit altérée. D'autres formes de plaques, tel que par exemple une plaque métallique de forme circulaire sont envisageables.

Selon une première alternative de ce mode de réalisation représentée à la figure 3.A, le couvercle 17 de la chambre de mesure comporte une plaque métallique 50 noyée dans le plastique constituant ledit couvercle. La plaque 50 peut être percée d'au moins un trou 51 afin d'améliorer le processus d'injection et l'adhérence du plastique à la plaque. Le procédé de fabrication du couvercle 17 consiste à injecter une matière plastique autour d'au moins un insert métallique en forme de plaque. Le moule est de forme adaptée au couvercle. La plaque 50 est positionnée dans le moule et maintenue au moyen de tétons, puis la matière plastique est injectée pour remplir le moule.
Ce couvercle étant soumis à la pression du liquide traversant le compteur mais également aux à coups de béliers et aux chocs du piston oscillant, avec le procédé de fabrication selon l'invention le couvercle présente une résistance améliorée et une déformation réduite par rapport au couvercle de l'art antérieur. Egalement, la forme générale de ce couvercle est simplifiée car il n'est plus nécessaire de la nervurer pour bénéficier d'une rigidité importante.

Selon une seconde alternative de ce mode de réalisation représentée à la figure 3.B, la paroi plane du piston 18 de la chambre de mesure comporte une plaque métallique 52 noyée dans le plastique constituant ledit piston. La plaque 52 peut être percée d'au moins un trou 53 afin d'améliorer le processus d'injection et l'adhérence du plastique à la plaque. Le procédé de fabrication du piston consiste à injecter une matière plastique autour d'au moins un insert métallique en forme de plaque. Le moule est de forme adaptée au piston. La plaque 52 est positionnée dans le moule au niveau de la paroi plane du piston et maintenue au moyen de tétons, puis la matière plastique est injectée pour remplir le moule.
Selon une troisième alternative de ce mode de réalisation représentée à la figure 3.C, la paroi cylindrique du piston 18 de la chambre de mesure comporte un anneau métallique 54 de section rectangulaire noyée dans le plastique constituant ledit piston. L'anneau 54 peut être percée d'au moins un trou 55 afin d'améliorer le processus d'injection et l'adhérence du plastique à la plaque. Le procédé de fabrication du piston consiste à injecter une matière plastique autour d'au moins un insert métallique en forme d'anneau. Le moule est de forme adaptée au piston. L'anneau 52 est positionnée dans le moule au niveau de la paroi cylindrique du piston et maintenue au moyen de tétons, puis la matière plastique est injectée pour remplir le moule.
Il est possible de combiner la seconde et la troisième alternative pour la fabrication du piston 18.

Avec le procédé de fabrication selon l'invention, le piston présente une meilleure tenue mécanique spécialement adaptée pour la mesure de débits important.

Selon une quatrième alternative de ce mode de réalisation représentée à la figure 3.D, le fond 20 de la partie inférieure comporte une plaque métallique 56 noyée dans le plastique constituant ladite partie inférieure. La plaque 56 peut être percée d'au moins un trou 57 afin d'améliorer le processus d'injection et l'adhérence du plastique à la plaque. Le procédé de fabrication de la partie inférieure consiste à injecter une matière plastique autour d'au moins un insert métallique en forme de plaque. Le moule est de forme adaptée à la partie inférieure. La plaque 56 est positionnée dans le moule au niveau du fond et maintenue au moyen de tétons, puis la matière plastique est injectée pour remplir le moule.
Selon une cinquième alternative de ce mode de réalisation représentée à la figure 3.D, la paroi latérale 19 de la partie inférieure comporte un anneau métallique 58 de section rectangulaire noyée dans le plastique constituant ladite partie inférieure. L'anneau 58 peut être percée d'au moins un trou 59 afin d'améliorer le processus d'injection et l'adhérence du plastique à la plaque. Le procédé de fabrication de la partie inférieure consiste à injecter une matière plastique autour d'au moins un insert métallique en forme d'anneau. Le moule est de forme adaptée à la partie inférieure. L'anneau 58 est positionnée dans le moule au niveau de la paroi latérale 19 et maintenue au moyen de tétons, puis la matière plastique est injectée pour remplir le moule.
Il est possible de combiner la quatrième et la cinquième alternative pour la fabrication de la partie inférieure.
Avec le procédé de fabrication selon l'invention, le fond et/ou la paroi latérale présente une meilleure rigidité ce qui permet à la partie inférieure d'avoir une meilleure tenue en endurance.
Dans tout ce qui précède, la matière plastique peut être chargée, par exemple de fibres de verre ou de carbone.

## Revendications

1. Procédé de fabrication d'un compteur de liquide comportant différents éléments constitutifs tels qu'un corps de compteur (1), des moyens de mesure que sont une chambre de mesure, son couvercle ou un piston (17, 18, 19, 20) et une bague de montage d'un totalisateur (14, 34), le procédé consistant à fabriquer au moins l'un desdits éléments constitutifs par un procédé de moulage par injection au moyen d'un moule de forme adaptée audit élément à fabriquer, **caractérisé en ce que** le procédé consiste à injecter une matière plastique autour d'un insert métallique (25, 26, 27, 28, 29, 36, 38, 50, 52, 54, 56, 58) destiné à former une partie de l'âme d'une partie d'un desdits éléments constitutifs.

2. Procédé de fabrication selon la revendication 1, pour lequel le procédé consiste à fabriquer le corps de compteur (1) en injectant une matière plastique autour d'au moins un insert (26, 27, 28, 29) destiné à former une partie de l'âme du corps de compteur (1).

3. Procédé de fabrication selon la revendications précédente, pour lequel le corps de compteur (1) comporte une partie supérieure (4) destinée à la fixation d'un totalisateur (14, 16, 34), le procédé consistant à injecter une matière plastique autour d'un insert (26) destiné à former une partie de l'âme de la partie supérieure pour renforcer une zone de fixation (13) dudit corps de compteur au totalisateur.

4. Procédé de fabrication selon la revendication 2 ou 3, pour lequel le corps de compteur (1) comporte une paroi latérale (10) muni de tubulures (6, 7), le procédé consistant à injecter une matière plastique autour d'un insert (27) positionné au dessus d'une zone où les tubulures (6, 7) débouchent dans une chambre de mesure (2) du corps de compteur (1), ledit insert (27) étant destiné à former une partie de l'âme de la paroi latérale (10).

5. Procédé de fabrication selon l'une des revendications 2 à 4, pour lequel le corps de compteur (1) comporte une paroi latérale (10) muni de tubulures (6, 7), le procédé consistant à injecter une matière plastique autour d'un insert (28) positionné en dessous d'une zone où les tubulures (6, 7) débouchent dans une chambre de mesure (2) du corps de compteur (1), ledit insert (28) étant destiné à former une partie de l'âme de la paroi latérale (10).

6. Procédé de fabrication selon l'une des revendications 2 à 5, pour lequel le corps de compteur (1) comporte un fond (9), le procédé consistant à injecter une matière plastique autour d'un insert (29) destiné à former une partie de l'âme du fond (9).

7. Procédé de fabrication selon la revendication 1, pour lequel le totalisateur (16) est emmanché sur une bague (14, 34) destinée à être fixée au corps du compteur (1), le procédé consistant à injecter une matière plastique autour d'un insert métallique destiné à former une partie de l'âme de la bague (14) pour renforcer la zone de fixation dudit totalisateur au corps de compteur.

8. Procédé de fabrication selon la revendication 7, pour lequel la bague (14, 34) est intégrée au totalisateur (16).

9. Procédé de fabrication selon l'une des revendications précédentes, pour lequel l'insert est un anneau métallique (25, 26, 27, 28, 29, 36, 38).

10. Procédé de fabrication selon l'une des revendications précédentes, pour lequel l'insert est un anneau (25, 26, 27, 28, 29) de section circulaire.

11. Procédé de fabrication selon l'une des revendications 1 à 10, pour lequel l'insert est un anneau (36) de section rectangulaire.

12. Procédé de fabrication selon l'une des revendications 1 à 10, pour lequel l'insert est un anneau (38) de section en forme de L correspondant à un anneau de section rectangulaire muni d'une collerette (39) dirigé vers l'intérieur de la bague (14, 34).

13. Procédé de fabrication selon la revendication 1, pour lequel les moyens de mesure comporte une chambre de mesure comprenant une partie supérieure munie d'un couvercle (17) venant s'emboîter sur une paroi latérale (19) d'une partie inférieure de la chambre de mesure, le procédé consistant à injecter une matière plastique autour d'un insert (50) destiné à former une partie de l'âme dudit couvercle (17).

14. Procédé de fabrication selon la revendication 1 ou 13, pour lequel les moyens de mesure comporte une chambre de mesure comprenant un piston (18) muni d'une paroi plane, le procédé consistant à injecter une matière plastique autour d'un insert (52) destiné à former une partie de l'âme de ladite paroi plane du piston (18).

15. Procédé de fabrication selon l'une des revendications 1 ou 13 à 14, pour lequel les moyens de mesure comporte une chambre de mesure comprenant un piston (18) muni d'une paroi cylindrique, le procédé consistant à injecter une matière plastique autour d'un insert (54) destiné à former une partie de l'âme de ladite paroi cylindrique du piston (18).

16. Procédé de fabrication selon l'une des revendications 1 ou 13 à 15, pour lequel les moyens de mesure comporte une chambre de mesure comprenant une partie inférieure formée par une paroi latérale (19) et un fond (20), le procédé consistant à injecter une matière plastique autour d'un insert (50) destiné à former une partie de l'âme dudit fond (20).

17. Procédé de fabrication selon l'une des revendications 1 ou 13 à 16, pour lequel les moyens de mesure comporte une chambre de mesure comprenant une partie inférieure formée par une paroi latérale (19) et un fond (20), le procédé consistant à injecter une matière plastique autour d'un insert (50) destiné à former une partie de l'âme de ladite paroi latérale (19).

18. Procédé de fabrication selon l'une des revendications 1 ou 13 à 17, pour lequel le procédé consiste à injecter une matière plastique autour d'un insert métallique formé d'une plaque (30, 50, 52, 56).

19. Procédé de fabrication selon l'une des revendications 1 ou 13 à 17, pour lequel le procédé consiste à injecter une matière plastique autour d'un insert métallique formé d'un anneau (54, 58).

20. Procédé de fabrication selon l'une des revendications 1 ou 13 à 17, pour lequel le procédé consiste à injecter une matière plastique autour d'un insert formé d'une plaque de forme hexagonale.

21. Procédé de fabrication selon l'une des revendications précédentes, pour lequel le procédé consiste à injecter une matière plastique autour d'un insert percé d'au moins un trou (23, 24, 37, 40, 51, 53, 55, 57, 59).

22. Compteur de liquide comportant différents éléments constitutifs tels qu'un corps de compteur (1), des moyens de mesure que sont une chambre de mesure, son couvercle ou un piston (17, 18, 19, 20) et une bague de montage d'un totalisateur (14, 34), au moins une partie d'un desdits éléments constitutifs est fabriquée par le procédé de fabrication selon l'une des revendications 1 à 21.
